# EUROPÄISCHE PATENTSCHRIFT

(11) **EP 0 950 205 B1**
(45) Veröffentlichungstag und Bekanntmachung des Hinweises auf die Patenterteilung: **09.10.2002**
(21) Anmeldenummer: 97951848.7
(22) Anmeldetag: 12.12.1997
(51) Int. Cl.: G02B 21/00

(54) **OPTISCHE ANORDNUNG IM STRAHLENGANG EINES MIKROSKOPS**
OPTICAL ARRANGEMENT DISPOSED IN A MICROSCOPE BEAM PATH
SYSTEME OPTIQUE SITUE DANS LE TRAJET DU FAISCEAU LUMINEUX D'UN MICROSCOPE

(30) Priorität: 24.12.1996 DE 19654211
(43) Veröffentlichungstag der Anmeldung: 20.10.1999
(73) Patentinhaber: Leica Microsystems Heidelberg GmbH, 69120 Heidelberg (DE)
(72) Erfinder: ENGELHARDT, Johann, D-76669 Bad Schönborn (DE); IHRIG, Christiane, D-68219 Mannheim (DE)
(74) Vertreter: Stamer, Harald
(86) Internationale Anmeldenummer: DE9702895
(87) Internationale Veröffentlichungsnummer: WO98028646

(56) Entgegenhaltungen:
- DE-A1- 3 804 642
- US-A- 4 827 125
- US-A- 5 161 053
- US-A- 5 334 830
- US-A- 5 563 710

## Beschreibung

Die Erfindung betrifft eine Mikroskopanordnung gemäß dem Oberbegriff des Anspruchs 1. Eine solche Anordnung ist aus DE-A-3804642 bekannt.

Optische Anordnungen der hier in Rede stehenden Art sind bereits seit langem aus der Praxis bekannt. Lediglich beispielhaft wird hierzu verwiesen auf J. Engelhardt und W. Knebel in "Physik in unserer Zeit", 24. Jahrg. 1993, Nr. 2, S. 70-78: "Konfokale Laserscanning-Mikroskopie"; auf J.B. Pawley, in "Handbook of Biological Confocal Microscopy", 2nd Edition, S. 581 ff; sowie auf die EP 0 280 375 B1.

Insbesondere im konfokalen Rastermikroskop ist es erforderlich, die Durchmesser der konfokalen Lochblenden an die unterschiedlichen Abbildungsmaßstäbe für verschiedene Mikroskopobjektive anzupassen. Wird die Lochblende zu groß gewählt, so reduziert sich die Auflösung entlang der optischen Achse. Bei zu klein gewählter Lochblende ist dagegen die Lichtausbeute reduziert, was insbesondere bei Fluoreszenzanwendungen nicht tolerierbar ist. Je nach optischer Anordnung haben herkömmliche Lochblenden einen Durchmesser im Bereich zwischen 10 µm bis 10mm.

Aus der Praxis ist es ebenfalls bereits bekannt, bei sehr langen Strahlengängen verstellbare Irisblenden zu verwenden, wobei diese Irisblenden motorisiert sein können. Der minimal nutzbare Durchmesser ist dabei jedoch auf ca. 0,1mm begrenzt.

Aus mechanisch-geometrischen Gründen sowie aus Gründen der mechanischen Stabilität und somit auch Justierstabilität sind bei der Realisierung konfokaler Optiken kompakte Bauweisen den langen Strahlengängen vorzuziehen. Bei kurzen Strahlengängen werden Lochblenden mit Durchmessern zwischen 5 und 500 µm verwendet. Die Variation des Lochdurchmessers kann durch Anordnung mehrerer Lochblenden mit jeweils festem Durchmesser erfolgen, die auf einer Scheibe justiert bzw. auf einem Rad angeordnet sind. Entsprechend läßt sich der Lochdurchmesser in diskreten Schritten verändern. Dies ist allerdings wegen der kleinen Lochdurchmesser und der grundsätzlich erforderlichen Positioniergenauigkeit äußerst problematisch, da eine solche Anordnung extrem justieranfällig ist.

Des weiteren ist aus der Praxis auch bereits eine kontinuierlich einstellbare Lochblende bekannt. Hier läßt sich mit Hilfe einer Motorisierung zweier Paare rechtwinklig zueinander angeordneter feiner Schneiden eine rautenförmige, kontinuierlich variable Öffnung zwischen 20 und 500 µm realisieren. Kleinere Durchmesser der Blendenöffnung sind aufgrund der mikromechanischen Anforderungen nach diesem bekannten Prinzip jedoch nicht realisierbar.

Der Erfindung liegt nun die Aufgabe zugrunde, eine optische Anordnung im Strahlengang des Mikroskops, insbesondere eines konfokalen Rastermikroskops, derart auszugestalten und weiterzubilden, daß eine kontinuierliche Tiefendiskrimination sowie eine optimale Anpassung an Objektive, Wellenlängen und Ausbeute mit einfachen Mitteln bei kleinstmöglicher Bauweise möglich ist.

Die erfindungsgemäße optische Anordnung im Strahlengang eines Mikroskops, insbesondere eines konfokalen Rastermikroskops, löst die voranstehende Aufgabe durch die Merkmale des Patentanspruches 1.

Im Strahlengang vor dem Objekt kann eine Anordnung von Objektiven vorgesehen sein. Wiederum vor diesen Objektiven könnte ein Scanner in herkömmlicher Weise angeordnet sein.

In besonders vorteilhafter Weise kann es sich bei der Variooptik um eine vorzugsweise motorisierte Zoomoptik handeln. Diese kann wiederum als übliche Zoomoptik ausgeführt sein, wie sie bspw. in Videokameras Verwendung findet. Jedenfalls ist es von ganz besonderem Vorteil, wenn sich bei der Zoomoptik bei fester Fokalebene die Vergrößerung oder bei fester Vergrößerung die Fokalebene variieren läßt, so daß eine optimale Variationsmöglichkeit gegeben ist.

Die Variooptik kann in der Weise ausgestaltet sein, daß restliche Farblängsfehler anderer optischer Komponenten des Rastermikroskops ausgeglichen werden.

Der zweite Effekt erlaubt es zusätzlich, daß die Fokalebene durch optische Mittel variiert werden kann, ohne daß das Objekt relativ zum Mikroskopobjektiv bewegt werden muß. Der sich daraus ergebene Vorteil liegt darin, daß der dynamische Einfluß durch die Viskosität des Öls bei der Immersionsmikroskopie keinen Einfluß auf die Fokussierung oder bei Abbildungen entlang der optischen Achse hat.

Ein ganz großer Vorteil der erfindungsgemäßen Anordnung liegt des weiteren darin, daß sowohl die Beleuchtungslochblende als auch die Detektionslochblende als Lochblende mit festem Durchmesser ausgeführt sein kann, so daß hier keine Mikromechanik erforderlich ist. Vorzugsweise sind die Lochblenden mit rundem Durchgang ausgeführt, um nämlich den negativen Effekt der aus der Praxis bekannten rautenförmigen variablen Lochblende ausschließen zu können. In Verbindung mit der Variooptik läßt sich der wirksame Durchmesser bishin zur Beugungsgrenze ohne feinmechanisch aufwendige Techniken und ohne weiterreichende Begrenzungen erreichen, nämlich lediglich unter Verwendung von Lochblenden mit rundem, festem Durchmesser.

Hinsichtlich einer alternativen Ausgestaltung der Lochblende ist es denkbar, diese durch das Ende einer Lichtleitfaser darzustellen, wobei eine solche Darstellung sowohl für die Beleuchtungslochblende als auch für die Detektionslochblende möglich ist. Die Lichtleitfaser könnte dabei als Monomode-Faser ausgeführt sein.

Die Beleuchtungslochblende könnte unmittelbar durch eine hinreichend kleine Lichtquelle dargestellt sein, wobei sich hier eine Kurzbogenlampe ganz besonders eignet.

Die Detektionslochblende könnte alternativ durch einen hinreichend kleinen Detektor dargestellt sein, wobei hier ein ein- oder mehrdimensionales Array in Frage kommt.

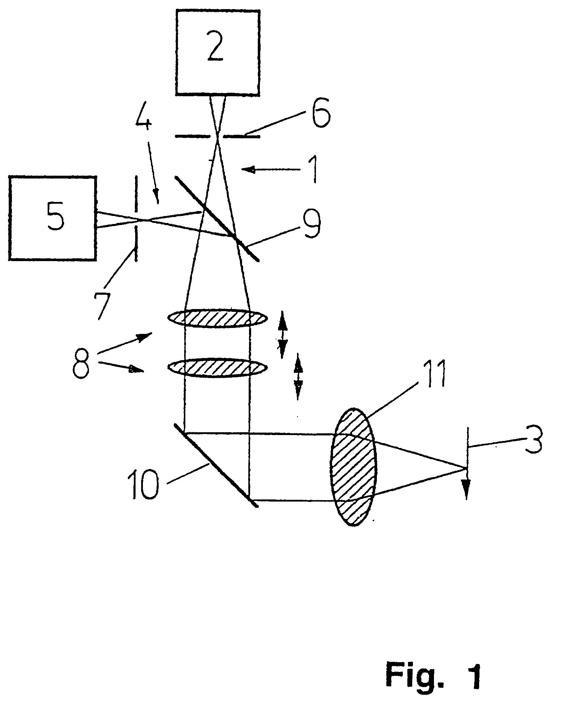

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Ansprüche, andererseits auf die nachfolgende Erläuterung eines Ausführungsbeispiels der Erfindung anhand der Zeichnung zu verweisen. in Verbindung mit der Erläuterung des bevorzugten Ausführungsbeispiels der Erfindung werden auch im allgemeinen bevorzugte Ausgestaltungen und Weiterbildungen der Lehre erläutert.

In der Zeichnung zeigt die einzige Figur in einer schematischen Darstellung ein Ausführungsbeispiel einer erfindungsgemäßen optischen Anordnung im Strahlengang eines konfokalen Rastermikroskops, wobei das Rastermikroskop der Einfachheit halber hier nicht dargestellt ist.

Die Figur zeigt eine optische Anordnung im Strahlengang eines konfokalen Rastermikroskops, wobei sowohl im Beleuchtungsstrahlengang 1 zwischen Lichtquelle 2 und Objekt 3 als auch im Detektionsstrahlengang 4 zwischen Detektor 5 und Objekt 3 jeweils eine Lochblende - Beleuchtungslochblende 6 bzw. Detektionslochblende 7 - angeordnet ist.

Erfindungsgemäß ist zwischen den Lochblenden 6, 7 und dem Objekt 3 eine Variooptik 8 zur Variation des optisch wirksamen Lochblendendurchmessers vorgesehen. Diese Variooptik 8 ist entsprechend der hier konkret gewählten Anordnung sowohl für die Lichtquelle 2 als auch für den Detektor 5 wirksam, ist nämlich zwischen einem Strahlteiler 9 und dem Objekt 3 angeordnet. im Konkreten ist der Variooptik 8 ein Scanner 10 - hier vereinfacht als Scan- und Umlenkspiegel dargestellt - und eine Anordnung von Objektiven 11 nachgeordnet.

Bei der Variooptik 8 handelt es sich um eine motorisierte Zoomoptik, wie sie in Videokameras Verwendung findet. Dabei läßt sich auf fester Fokalebene die Vergrößerung oder bei fester Vergrößerung die Fokalebene variieren.

Sowohl die Beleuchtungslochblende 6 als auch die Detektionslochblende 7 ist als runde Lochblende mit festem Durchmesser ausgeführt, wobei sich die Variation des optisch wirksamen Lochblendendurchmessers ausschließlich durch die Variooptik 8 realisieren läßt.

Die Variooptik 8 dient zur Einstellung der Fokuslage oder auch zur kontinuierlichen Fokus-Variation, um Bilder entlang der optischen Achse zu erzeugen. Hinsichtlich weiterer alternativer Ausgestaltungen der Lochblenden wird zur Vermeidung von Wiederholungen auf den allgemeinen Teil der Beschreibung verwiesen.

### Bezugszeichenliste

- 1: Beleuchtungsstrahlengang (Lichtquelle-Objekt)
- 2: Lichtquelle
- 3: Objekt
- 4: Detektionsstrahlengang (Detektor-Objekt)
- 5: Detektor
- 6: Beleuchtungslochblende
- 7: Detektionslochblende
- 8: Variooptik
- 9: Strahlteiler
- 10: Scanner
- 11: Objektiv

## Patentansprüche

1. Mikroskop, insbesondere ein konfokales Rastermikroskop mit einer optischen Anordnung im Strahlengang des Mikroskops, wobei im Beleuchtungsstrahlengang (1) zwischen Lichtquelle (2) und Objekt (3) eine Beleuchtungslochblende und im Detektionsstrahlengang (4) zwischen Detektor (5) und Objekt (3) eine Detektionslochblende (7) angeordnet ist,
**dadurch gekennzeichnet, daß** zwischen den Lochblenden (6, 7) und dem Objekt (3) ein Strahlteiler (9) und zwischen dem Strahlteiler (9) und dem Objekt (3) eine einzige Vergrösserungoptik (8) zur Variation des optisch wirksamen Lochblendendurchmessers vorgesehen ist, die sowohl für die Lichquelle (2) als auch für den Detektor (5) wirksam ist.

2. Mikroskop nach Anspruch 1, **dadurch gekennzeichnet, daß** im Beleuchtungsstrahlengang (1) vor dem Objekt (3) gegebenenfalls ein Scanner (10) und eine Anordnung von Objektiven (11) vorgesehen sind.

3. Mikroskop nach Anspruch 1 oder 2, **dadurch gekennzeichnet, daß** die Vergrösserungsoptik derart ausgestaltet ist, daß restliche Farblängsfehler anderer optischer Komponenten des Mikroskops ausgeglichen werden.

4. Mikroskop nach einem der Ansprüche 1 bis 3, **dadurch gekennzeichnet, daß** es sich bei der Vergrösserungsoptik (8) um eine vorzugsweise motorisierte Zoomoptik handelt.

5. Mikroskop nach Anspruch 4, **dadurch gekennzeichnet, daß** es sich bei der Zoomoptik um eine in Videokameras übliche Zoomoptik handelt.

6. Mikroskop nach Anspruch 4 oder 5, **dadurch gekennzeichnet, daß** bei der Zoomoptik Mittel zum Variieren der Vergrößerung bei fester Fokalebene oder der Fokalebene bei fester Vergrößerung vorgesehen sind.

7. Mikroskop nach einem der Ansprüche 1 bis 6, **dadurch gekennzeichnet, daß** die Beleuchtungslochblende (6) als runde Lochblende mit festem Durchmesser ausgeführt ist.

8. Mikroskop nach einem der Ansprüche 1 bis 7, **dadurch gekennzeichnet, daß** die Detektionslochblende (7) als runde Lochblende mit festem Durchmesser ausgeführt ist.

9. Mikroskop nach einem der Ansprüche 1 bis 8, **dadurch gekennzeichnet, daß** die Lochblende durch das Ende einer Lichtleitfaser darstellbar ist.

10. Mikroskop nach Anspruch 9, **dadurch gekennzeichnet, daß** die Lichtleitfaser als Monomode-Faser ausgeführt ist.

11. Mikroskop nach einem der Ansprüche 1 bis 10, **dadurch gekennzeichnet, daß** die Beleuchtungslochblende (6) unmittelbar durch eine hinreichend kleine Lichtquelle (2) dargestellt ist.

12. Mikroskop nach Anspruch 11, **dadurch gekennzeichnet, daß** die Lichtquelle (2) als Kurzbogenlampe ausgeführt ist.

13. Mikroskop nach einem der Ansprüche 1 bis 12, **dadurch gekennzeichnet, daß** die Detektionslochblende (7) durch einen hinreichend kleinen Detektor (5) dargestellt ist.

14. Mikroskop nach Anspruch 13, **dadurch gekennzeichnet, daß** der Detektor (5) als ein- oder mehrdimensionales Array ausgeführt ist.

## Claims

1. Microscope, especially a confocal scanning microscope, with an optical arrangement in the beam path of the microscope, wherein a pinhole, the illumination pinhole (6) or the detection pinhole (7), is placed in the illumination beam path (1) between the light source (2) and the object (3) and also in the detection beam path (4) between the object (3) and the detector (5), **characterized in that** a varifocal optical system (8) is placed between at least one of the pinholes (6,7) and the object (3) to vary the optically effective pinhole diameter. the varifocal optical system (8) is effective for the light source (2) and the detector (5).

2. Microscope according to Claim 1, **characterized in that** a scanner (10) and an assembly of objective lenses (11) may if desired be placed in the illuminating beam path (1) before the object (3).

3. Microscope according to Claim 1 or 2, **characterized in that** the varifocal optical system is designed to compensate for residual longitudinal chromatic aberrations of other optical components of the microscope.

4. Microscope according to one of Claims 1 to 3, **characterized in that** the varifocal optical system (8) is a preferably motorized zoom optical system.

5. Microscope according to Claim 4, **characterized in that** the zoom optical system is a zoom optical system commonly used in video cameras.

6. Microscope according to Claim 4 or 5, **characterized in that** the zoom optical system provides a means to vary the magnification with a fixed focal plane or to vary the focal plane with a fixed magnification.

7. Microscope according to one of Claims 1 to 6, **characterized in that** the illumination pinhole (6) is made as a circular pinhole with a fixed diameter.

8. Microscope according to one of Claims 1 to 7, **characterized in that** the detection pinhole (7) is made as a circular pinhole with a fixed diameter.

9. Microscope according to one of Claims 1 to 8, **characterized in that** the pinhole can be represented by the end of an optical fibre.

10. Microscope according to Claim 9, **characterized in that** the optical fibre is designed as a monomode fibre.

11. Microscope according to one of Claims 1 to 10, **characterized in that** the illumination pinhole (6) can be represented by a sufficiently small light source (2).

12. Microscope according to Claim 11, **characterized in that** the light source (2) is made as a short-arc lamp.

13. Microscope according to one of Claims 1 to 12, **characterized in that** the detection pinhole (7) can be represented by a sufficiently small detector (5).

14. Microscope according to Claim 13, **characterized in that** the detector (5) is made as a unidimensional or multidimensional array.

## Revendications

1. Microscope, particulièrement un microscope à balayage confocal, avec un arrangement dans le trajet des rayons du microscope, qui a un diaphragme à trou - le diaphragme à trou d'éclairage (6) - dans le trajet des rayons d'éclairage (1) entre la source lumineuse (2) et l'objet (3) et qui a aussi un diaphragme à trou - le diaphragme à trou de détection (7) - dans le trajet des rayons de détection (4) entre le détecteur (5) et l'objet (3), **caractérisé en ce que** au moins entre un des diaphragmes à trou (6,7) et l'objet (3) une variooptique (8) est prévue pour la variation du diamètre de diaphragme à trou, qui est optiquement efficace.

2. Microscope selon revendication 1, **caractérisé en ce que** un arrangement d'objectifs (11) et -le cas échéant - un scanner (10) sont prévues dans le trajet d'éclairage (1) devant l'objet (3).

3. Microscope selon revendications 1 ou 2, **caractérisé en ce que** la variooptique (8) est tellement construit, que les aberrations chromatiques longitudinales restantes d'autres composants du microscope sont compensées.

4. Microscope selon l'une quelconque des revendications 1 à 3, **caractérisé en ce que** la variooptique (8) est une optique zoom, qui est motorisé de préférence.

5. Microscope selon revendication 4, **caractérisé en ce que** la optique zoom est une optique zoom coutumière, comme elle est utilisé dans des caméras vidéo.

6. Microscope selon revendication 4 ou 5, **caractérisé en ce que** la optique zoom a des moyens pour varier l'agrandissement pendant le plan focal est fixe ou à varier le plan focal pendant l'agrandissement est fixe,

7. Microscope selon l'une quelconque des revendications 1 à 6, **caractérisé en ce que** le diaphragmes à trou d'éclairage (6) est réalisé comme un diaphragme à trou rond, qui a un diamètre fixe.

8. Microscope selon l'une quelconque des revendications 1 à 7, **caractérisé en ce que** le diaphragmes à trou de détection (7) est réalisé comme un diaphragme à trou rond, qui a un diamètre fixe.

9. Microscope selon l'une quelconque des revendications 1 à 8, **caractérisé en ce que** le diaphragme est réalisable par le bout d'une fibre optique.

10. Microscope selon revendication 9, **caractérisé en ce que** la fibre optique est réalisé comme une fibre monomodale.

11. Microscope selon l'une quelconque des revendications 1 à 10, **caractérisé en ce que** le diaphragme à trou d'éclairage (2) est réalisé par une source lumineuse, qui était suffisamment petite.

12. Microscope selon revendication 11, **caractérisé en ce que** le diaphragme à trou d'éclairage (2) est réalisé par une lampe à arc courte.

13. Microscope selon l'une quelconque des revendications 1 à 12, **caractérisé en ce que** le diaphragme à trou de détection est réalisé par un détecteur (5), qui était suffisamment petite.

14. Microscope selon revendication 13, **caractérisé en ce que** le détecteur (5) est une matrice d'une ou plusieurs dimensions.
